# EUROPÄISCHE PATENTSCHRIFT

(11) **EP 1 614 964 B1**
(45) Veröffentlichungstag und Bekanntmachung des Hinweises auf die Patenterteilung: **11.09.2013**
(21) Anmeldenummer: 05105235.5
(22) Anmeldetag: 15.06.2005
(51) Int. Cl.: H01M 8/06, F23D 14/22

(54) **Brenner**
Burner
Brûleur

(30) Priorität: 09.07.2004 DE 102004033545
(43) Veröffentlichungstag der Anmeldung: 11.01.2006
(73) Patentinhaber: J. Eberspächer GmbH & Co. KG, 73730 Esslingen (DE)
(72) Erfinder: Kaupert, Andreas, 73730 Esslingen (DE); Eberspach, Günter, 72649, Wolfschlugen (DE); Collmer, Andreas, 73773, Aichwald (DE)
(74) Vertreter: BRP Renaud & Partner

(56) Entgegenhaltungen:
- DE-A1- 4 217 892
- DE-A1- 10 149 329
- DE-A1- 19 618 220
- US-A- 3 909 299
- US-A- 5 292 246
- US-A- 6 033 793
- US-A1- 2003 223 926

## Beschreibung

Die vorliegende Erfindung betrifft eine Kombination einer Brennstoffzelle und eines Brenners zum Verbrennen eines gasförmigen wasserstoffhaltigen Brennstoffs mit einem gasförmigen sauerstoffhaltigen Oxidator, mit den Merkmalen des Oberbegriffs des Anspruchs 1.

Moderne Kraftfahrzeuge können zur Deckung ihres Stromverbrauchs mit einer motorunabhängig arbeitenden Stromerzeugereinrichtung ausgestattet sein, die mit einer Brennstoffzelle betrieben wird. Hierzu wird mit Hilfe eines Reformers aus dem jeweils zur Verfügung stehenden Kraftstoff, wie z.B. Benzin oder Diesel, ein wasserstoffhaltiges Brennstoffgas als Reformat hergestellt. Dieses Reformat oder Brennstoffgas kann dann in einer Brennstoffzelle zusammen mit einem gasförmigen sauerstoffhaltigen Oxidator, in der Regel Luft, zur Erzeugung von Strom genutzt werden. Hierzu enthält die Brennstoffzelle zumindest eine Elektrolytplatte, an deren Anodenseite das Brennstoffgas und an deren Kathodenseite das Oxidatorgas vorbeiströmen. Hierbei kommt es sowohl im Brennstoffgas als auch im Oxidatorgas zu chemischen Reaktionen, aus denen entsprechende Reaktionsprodukte hervorgehen. In der Regel wird dabei im Brennstoffgas nicht der gesamte Wasserstoff umgesetzt, so dass an der Anodenseite ein Wasserstoff-Produktgas-Gemisch aus der Brennstoffzelle austritt. Entsprechendes gilt auch für das Oxidatorgemisch, da auch dort in der Regel nicht der gesamte Sauerstoff umgesetzt werden kann. In der Folge tritt an der Kathodenseite ein Sauerstoff-Produktgas-Gemisch aus der Brennstoffzelle aus. Im Hinblick auf strenge Grenzwerte für Schadstoffemissionen ist es unerwünscht, den Wasserstoff in die Umgebung abzuführen.

Aus der DE 42 17 892 A1 ist eine derartige Kombination bekannt, bei der in einem Brennraum im Betrieb des Brenners die Verbrennungsreaktion abläuft, wobei der Brennstoff durch ein an einer Anodenseite einer Brennstoffzelle austretendes Wasserstoff-Produktgas-Gemisch gebildet ist, während der Oxidator zumindest teilweise durch ein an einer Kathodenseite einer Brennstoffzelle austretendes Sauerstoff-Produktgas-Gemisch gebildet ist. Bei der bekannten Kombination weist die jeweilige Brennstoffzelle zwei Endplatten und mehrere Elektrolyplatten auf, die zwischen den Endplatten angeordnet und aufeinander gestapelt sind und in oder zwischen denen ein Brennstoffpfad und ein Oxidatorpfad ausgebildet ist.

Aus der US 5 292 246 A ist ein Brenner für ein Brennstoffzellensystem bekannt, dessen Brennraum eingangsseitig mit einer Wandstruktur verschlossen ist, die mehrere Brennstofföffnungen und mehrere Oxidatoröffnungen aufweist, durch die im Betrieb des Brenners Brennstoff bzw. Oxidator in den Brennraum eingeleitet wird. Der bekannte Brenner dient in einem Reformer des Brennstoffzellensystems zum Erzeugen eines wasserstoffhaltigen Reformatgases mittels partieller Oxidation.

Aus der DE 101 49 329 A ist ein integrierter rekuperativer Brenner bekannt, dessen Brennraum eingangsseitig durch eine keramische Wandstruktur begrenzt ist, die Brennstoffkanäle und Oxidatorkanäle enthält. Der bekannte Brenner ist dabei als Diffusorbrenner ausgestaltet und kann bei einer Hausfeuerungsanlage zum Einsatz kommen.

Aus der US 6 033 793 A ist ein Brennstoffzellensystem bekannt, das einen Reformer, eine Brennstoffzelle und einen Restgasbrenner umfasst. Der Reformer wird über eine Düse mit vorgeheizter Einlassluft und Brennstoff versorgt, wozu die Düse separate Brennstoffleitungen und Oxidatorleitungen aufweist.

Die vorliegende Erfindung beschäftigt sich mit dem Problem, für eine Brennstoffzelle einen Weg zur Schadstoffreduzierung aufzuzeigen.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einem Brennraum des Brenners den Oxidator und den Brennstoff durch separate Brennstofföffnungen bzw. Oxidatoröffnungen zuzuführen, die in einer den Brennraum begrenzenden Wandstruktur ausgebildet sind. Durch die getrennte Zuführung von Oxidator und Brennstoff kommt es erst im Brennraum bzw. am Eintritt in den Brennraum zur Durchmischung von Oxidator und Brennstoff. Dies hat zur Folge, dass erst im Brennraum bzw. an dessen Eintritt das hochreaktive Brennstoff-Oxidator-Gemisch gebildet wird. Auf diese Weise kann die Verbrennungsreaktion sicher im Brennraum ablaufen.

Im Hinblick auf die Schadstoffemissionen einer Brennstoffzelle kann der erfindungsgemäße Brenner besonders einfach dazu benutzt werden, das anodenseitige Wasserstoff-Produktgas-Gemisch als Brennstoff und das kathodenseitige Sauerstoff-Produktgas-Gemisch als Oxidator dem Brennraum zuzuführen, um darin den restlichen Wasserstoff zu verbrennen. Eine Emission von Wasserstoff in die Umgebung kann somit effektiv verhindert werden.

Von besonderem Vorteil ist eine Weiterbildung, bei welcher zumindest ein Wärmeübertrager vorgesehen ist, der im Betrieb des Brenners durch Verbrennungswärme beheizt wird und der in einen Heizkreis eingebunden ist, der zum Beheizen einer Brennkraftmaschine und/oder eines Fahrgastraums eines Fahrzeugs und/oder eines Frachtraum eines Fahrzeugs und/oder zumindest eines Edukts eines Reformer- und Brennstoffzellenprozesses dient. Auf diese Weise kann geschickt eine motorunabhängige Zusatzheizung realisiert werden, wobei gleichzeitig die Schadstoffemission der Brennstoffzelle reduziert werden kann.

Eine besonders kompakte Bauweise für eine derartige Brennstoffzelle-Brenner-Kombination bzw. für eine derartige Brennstoffzelle-Heizgerät-Kombination wird erfindungsgemäß dadurch erreicht, dass die Wandstruktur des Brenners eine von zwei Endplatten einer Brennstoffzelle bildet, die zwischen ihren Endplatten mehrere Elektrolytplatten aufweist, in oder zwischen denen ein Brennstoffpfad und ein Oxidatorpfad ausgebildet sind. Die Wandstruktur bildet somit ein gemeinsames Bauteil der Brennstoffzelle und des Brenners, was eine platzsparende, kompakte Bauweise ermöglicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine teilweise geschnittene perspektivische Ansicht auf eine Brennstoffzelle-Heizgerät-Kombination nach der Erfindung,
- Fig. 2: einen Längsschnitt durch die Brennstoffzelle-Heizgerät-Kombination nach Fig. 1,
- Fig. 3: einen Querschnitt durch die Brennstoffzelle-Heizgerät-Kombination nach Fig. 1,
- Fig. 4: eine vergrößerte Ansicht auf ein Detail IV in Fig. 2,
- Fig. 5: eine vergrößerte perspektivische Draufsicht auf eine Wandstruktur eines Brenners nach der Erfindung,
- Fig. 6: eine Ansicht wie in Fig. 5, jedoch bei einer anderen Ausführungsform,
- Fig. 7: eine teilweise geschnittene perspektivische Ansicht auf die Wandstruktur, jedoch bei einer weiteren Ausführungsform.

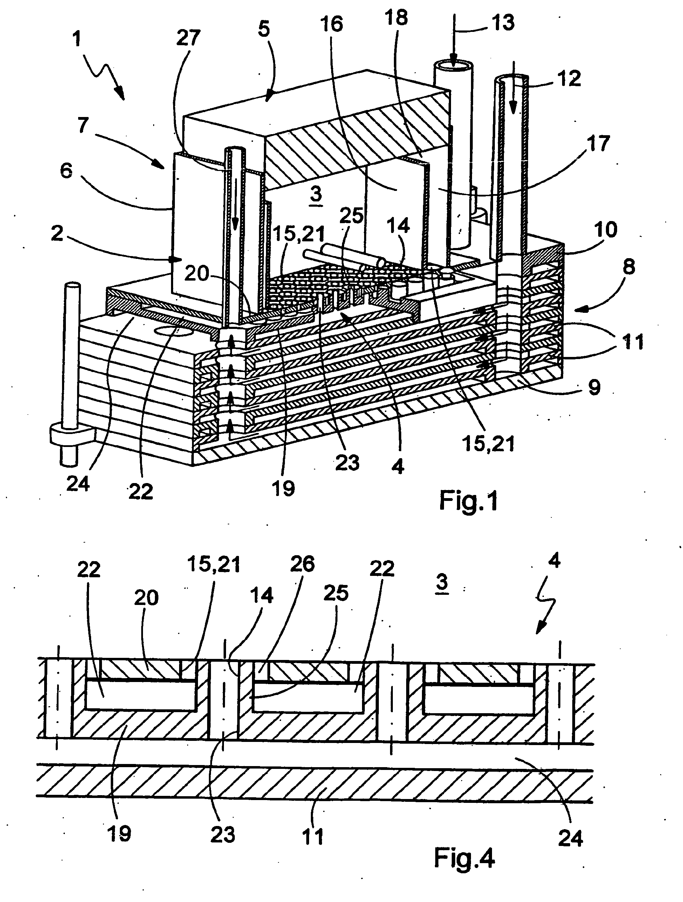

Die Fig. 1 bis 5 zeigen eine mögliche Ausführungsform einer erfindungsgemäßen Brennstoffzelle-Heizgerät-Kombination 1, die mit einem Brenner 2 nach der Erfindung ausgestattet ist. Dieser Brenner 2 enthält einen Brennraum 3, in dem im Betrieb des Brenners 2 eine Verbrennungsreaktion ablaufen kann. Der Brenner 2 ist hier eingangsseitig von einer Wandstruktur 4, ausgangsseitig durch einen Wärmeübertrager 5 und seitlich durch eine Außenwandung 6 begrenzt. Durch die Wandstruktur 4 wird der Brennraum 3 mit einem gasförmigen wasserstoffhaltigen Brennstoff und mit einem gasförmigen sauerstoffhaltigen Oxidator versorgt. Durch den ausgangsseitig angeordneten Wärmeübertrager 5 können die heißen Verbrennungsabgase den Brennraum 3 verlassen. Hierbei wird der Wärmeübertrager 5 beheizt.

Die Kombination des Brenners 2 mit dem Wärmeübertrager 5 bildet ein Heizgerät 7, das beispielsweise zum Vorwärmen einer Brennkraftmaschine, insbesondere eines Kraftfahrzeugs, und/oder zum Beheizen eines Fahrgastraums eines Kraftfahrzeugs und/oder zum Beheizen eines Nutzraums eines Kraftfahrzeugs genutzt werden kann. Besonders vorteilhaft ist eine Nutzung des Heizgeräts 7 zum Vorheizen von Edukten eines Reformer- und Brennstoffzellen-Prozesses. Derartige Edukte sind in der Regel Luft und Kraftstoff, wie z.B. Diesel, Benzin, Synfuel, Sunfuel, Wasserstoff, Erdgas. Hierzu ist dann der Wärmeübertrager 5 auf geeignete Weise in einen entsprechenden Heizkreis (bzw. Kühlkreis) der Brennkraftmaschine bzw. einer Fahrgastraum- und/oder Nutzraum-Heizung integriert. Zum Vorwärmen der Edukte können diese auf geeignete Weise ebenfalls mit einem entsprechenden Heizkreis, in den der Wärmeübertrager 5 eingebunden ist, wärmeübertragend gekoppelt sein oder durch den Wärmeübertrager 5 geleitet werden.

Die Kombination 1 umfasst außerdem eine Brennstoffzelle 8, die beispielsweise als Hochtemperatur-Brennstoffzelle (SOFC) ausgestaltet sein kann. Die Brennstoffzelle umfasst zwei Endplatten 9 und 10 sowie mehrere, zwischen den Endplatten 9, 10 angeordnete, aufeinander gestapelte Elektrolytplatten 11. Die Elektrolytplatten 11 sind so ausgestaltet und aufeinander gestapelt, dass sie im Inneren der Brennstoffzelle 8 einen anodenseitigen Brennstoffpfad 12 sowie einen kathodenseitigen Oxidatorpfad 13 ausbilden. Brennstoffpfad 12 und Oxidatorpfad 13 sind hier durch in der jeweiligen Strömungsrichtung orientierte Pfeile angedeutet. Der Brennstoff der Brennstoffzelle 8 ist dabei ein von einem hier nicht dargestellten Reformer hergestelltes Reformat. Bei einer Anwendung der Kombination 1 in einem Kraftfahrzeug arbeitet der Reformer mit dem dort zur Verfügung stehenden Kraftstoff, also mit Diesel oder Benzin. Dementsprechend besteht das Reformat zumindest zu einem großen Teil aus Wasserstoff. Der Oxidator der Brennstoffzelle 8 ist in der Regel Umgebungsluft und enthält somit zu einem großen Teil Sauerstoff. Bei der Durchströmung des Brennstoffpfads 12 und des Oxidatorpfads 13 werden ein großer Teil des Wasserstoffs sowie des Sauerstoffs "verstromt", das heißt, es laufen chemische Reaktionen ab, bei denen Reaktionsprodukte unter Abgabe von Strom erzeugt werden. Der so erzeugte Strom kann abgegriffen werden, so dass die Brennstoffzelle 8 als Stromerzeugereinrichtung genutzt werden kann.

Im Brennstoffpfad 12 entsteht durch den Brennstoffzellenprozess ein Wasserstoff-Produktgas-Gemisch, das unverbrannten Wasserstoff enthält und dem Brenner 2 als Brennstoff zugeführt wird. In entsprechender Weise entsteht im Oxidatorpfad 13 während des Brennstoffzellenprozesses ein Oxidator-Produktgas-Gemisch, das unverbrannten Sauerstoff enthält und dem Brenner 2 als Oxidator zugeführt wird. Im Brenner 2 kann dann dieser Brennstoff mit dem Oxidator verbrennen. Dadurch kann eine Emission des Wasserstoffs in die Umgebung vermieden werden. Gleichzeitig kann die dabei entstehende Abwärme mit Hilfe des Wärmeübertragers 5 zum Beheizen verschiedener Aggregate und insbesondere der Edukte des Reformer- und Brennstoffzellen-Prozesses genutzt werden.

Von besonderem Vorteil ist nun die hier gezeigte Ausführungsform, bei welcher die dem Brenner 2 zugewandte Endplatte 10 der Brennstoffzelle 8 durch die Wandstruktur 4 des Brenners 2 gebildet ist. Das heißt, in die Wandstruktur 4 ist die Funktionalität dieser Endplatte 10 integriert. Auf diese Weise kann die erfindungsgemäße Brennstoffzelle-Heizgerät-Kombination 1 besonders kompakt bauen.

Sofern der Brenner 2 nicht Bestandteil eines Heizgeräts 7 ist, handelt es sich bei der Kombination 1 dementsprechend nur um eine Brennstoffzelle-Brenner-Kombination.

Bei einer alternativen Bauweise kann der Brenner 2 auch ohne Brennstoffzelle 8 realisiert werden, z. B. in einer motorunabhängigen Heizung bei einem mit Wasserstoff betriebenen Fahrzeug. Die Wandstruktur 4 kann dann beispielsweise an einer vom Brennraum 3 abgewandten Seite mit einer geeigneten hier nicht gezeigten Verschlussplatte versehen und im übrigen unverändert sein. Insbesondere kann der Brenner 2 so ausgestaltet sein, dass er wahlweise als separater Brenner 2 oder kombiniert mit der Brennstoffzelle 8 verwendbar ist.

Da ein Wasserstoff-Oxidator-Gemisch eine hohe Reaktivität aufweist, besteht insbesondere in Verbindung mit hohen Temperaturen die Gefahr einer Selbstentzündung. Um diese Gefahr zu reduzieren, erfolgt beim erfindungsgemäßen Brenner 2 die Gemischbildung erst im Brennraum 3 bzw. am Einlass von Brennstoff und Oxidator in den Brennraum 3. Zu diesem Zweck enthält die Wandstruktur 4 mehrere Brennstofföffnungen 14, durch die im Betrieb des Brenners 2 Brennstoff in den Brennraum 3 eingeleitet werden kann. Des Weiteren enthält die Wandstruktur 4 mehrere bezüglich der Brennstofföffnungen 14 separate Oxidatoröffnungen 15, durch die im Betrieb des Brenners 2 der Oxidator in den Brennraum 3 eingeleitet werden kann. Die Brennstofföffnungen 14 und die Oxidatoröffnungen 15 liegen bei der hier gezeigten, bevorzugten Ausführungsform in einer Ebene. Zweckmäßig erstreckt sich diese Ebene senkrecht zur Einströmrichtung von Brennstoff und Oxidator in den Brennraum 3. Insgesamt ergibt sich dadurch in Verbindung mit einer entsprechenden, gleichmäßigen und insbesondere symmetrischen Anordnung der Oxidatoröffnungen 15 und der Brennstofföffnungen 14 eine homogene Verteilung der einströmenden Gase. Hierdurch kann eine besonders große Flammenfront innerhalb des Brennraums 3 realisiert werden, die außerdem vergleichsweise stabil brennt.

Die Fig. 1 bis 3 zeigen außerdem eine besonders vorteilhafte Variante des Brenners 2, da hier der Brennraum 3 zusätzlich zur außen liegenden Außenwandung 6 außerdem mit einer innen liegenden Innenwandung 16 seitlich eingefasst ist. Die Innenwandung 16 erstreckt sich dabei im wesentlichen parallel zur Außenwandung 6 und ist beabstandet zur Außenwandung 6 angeordnet, so dass zwischen Innenwandung 16 und Außenwandung 6 ein Kühlraum 17 ausgebildet ist. Dieser Kühlraum 17 umschließt die Brennkammer 3 in Umfangsrichtung insbesondere vollständig. Dieser Kühlraum 17 wird im Betrieb des Brenners 2 mit einem Kühlgas beschickt, wodurch die Innenwandung 16 und insbesondere die Außenwandung 6 effektiv gekühlt werden können. Als Kühlgas wird vorzugsweise der Oxidator verwendet, der hierzu über mehrere Oxidatoröffnungen 15 eingangsseitig in den Kühlraum 17 eingeleitet wird. Dementsprechend ist der Kühlraum 17 eingangsseitig mit mehreren Oxidatoröffnungen 15 verbunden. Ausgangsseitig kommuniziert der Kühlraum 17 bei 18 mit dem Inneren des Brennraums 3. Hierzu ist die Innenwandung 16 nicht ganz bis an den Wärmeübertrager 5 herangeführt, so dass am freien Ende der Innenwandung 16 der zur Kühlung genutzte Oxidator vom Kühlraum 17 in den Brennraum 3 überströmen kann. Beispielsweise kann dieses Kühlgas so zur Nachverbrennung genutzt werden.

Bei der hier gezeigten Ausführungsform der Fig. 1 bis 3 ist an den Hohlraum 22 außerdem eine Zusatzleitung 27 angeschlossen, durch die im Bedarfsfall zusätzlicher Oxidator, z.B. kalte Luft, dem Hohlraum 22 und somit dem Brennraum 3 zugeführt werden kann.

Um den Oxidator und den Brennstoff durch die Brennstofföffnungen 14 bzw. durch die Oxidatoröffnungen 15 getrennt voneinander in den Brennraum 3 einleiten zu können, ist die Wandstruktur 4 vorzugsweise mit einer Grundplatte 19 und einer Abdeckplatte 20 ausgestattet. Die Abdeckplatte 20 ist dabei an einer dem Brennraum 3 zugewandten Seite der Grundplatte 19 angeordnet. Die Abdeckplatte 20 enthält zumindest mehrere erste Durchtrittsöffnungen 21, die bei den Ausführungsformen der Fig. 1 bis 5 mit den Oxidatoröffnungen 15 zusammenfallen bzw. diese bilden.

Bei den Ausführungsformen der Fig. 1 bis 6 ist zwischen der Abdeckplatte 20 und der Grundplatte 19 ein Hohlraum 22 ausgebildet. Mit diesem Hohlraum 22 kommunizieren die ersten Durchtrittsöffnungen 21 der Abdeckplatte 20. Bei den Ausführungsformen der Fig. 1 bis 4 ist dieser Hohlraum 22 an den Oxidatorpfad 13 angeschlossen, wodurch das Oxidator-Produktgas-Gemisch, das die Brennstoffzelle 8 kathodenseitig verlässt, in den Hohlraum 22 gelangt und von diesem durch die ersten Durchtrittsöffnungen 21, also durch die Oxidatoröffnungen 15 in den Brennraum 3 gelangt.

Bei den Ausführungsformen der Fig. 1 bis 6 ist außerdem die Grundplatte 19 mit mehreren Durchtrittsöffnungen 23 ausgestattet. Dabei trennt die Grundplatte 19 den Hohlraum 22 von einem Zuführraum 24, mit dem die Durchtrittsöffnungen 23 der Grundplatte 19 kommunizieren. Diese Durchtrittsöffnungen 23 sind außerdem mit den Brennstofföffnungen 14 verbunden, was jedoch weiter unten noch näher erläutert. Bei den hier gezeigten Ausführungsformen der Fig. 1 bis 4 ist der Zuführraum 24 an den Brennstoffpfad 12 der Brennstoffzelle 8 angeschlossen. Dementsprechend tritt das anodenseitig aus der Brennstoffzelle 8 austretende Wasserstoff-Produktgas-Gemisch in den Zuführraum 24 ein und durch die Durchtrittsöffnungen 23 der Grundplatte 19 daraus aus und durch die Brennstofföffnungen 14 in den Brennraum 3 ein. Somit kann mit Hilfe der Grundplatte 19 der über den Hohlraum 22 zugeführte Oxidator bis zum Eintritt in den Brennraum 3 von dem über den Zuführraum 24 zugeführten Brennstoff sicher getrennt werden.

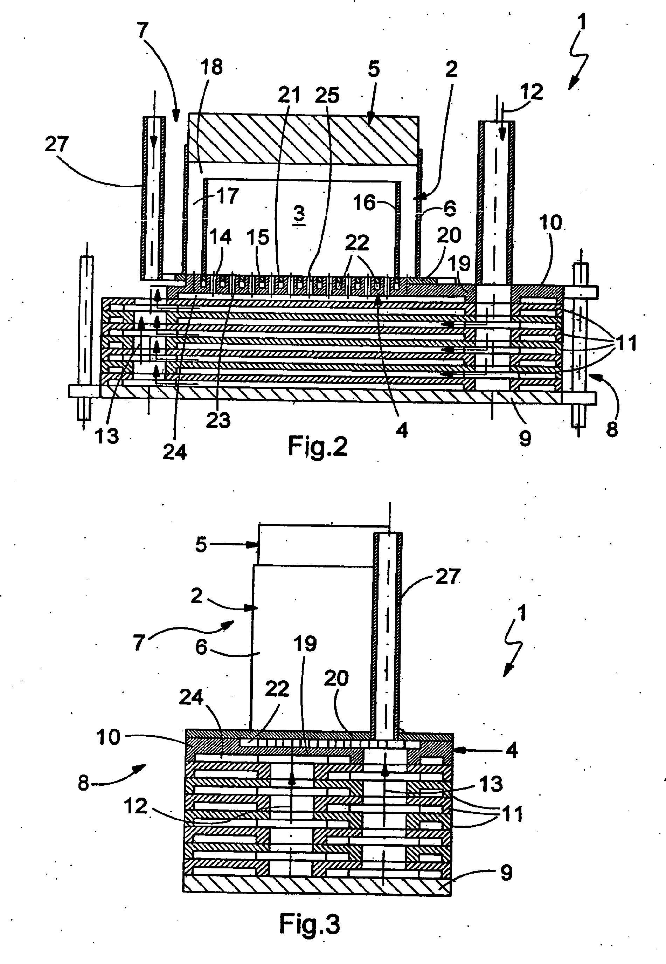

Bei den Ausführungsformen der Fig. 1 bis 5 handelt es sich um eine besondere Ausführungsform, bei welcher die Durchtrittsöffnungen 23 der Grundplatte 19 koaxial zu den ersten Durchtrittsöffnungen 21 der Abdeckplatte 20 angeordnet sind. Dies geht insbesondere aus den Fig. 2 und 4 deutlich hervor. Die koaxiale Ausrichtung führt im Betrieb des Brenners 2 dazu, dass das über den Zuführraum 24 zugeführte Brennstoffgas ebenso wie das über den Hohlraum 22 zugeführte Oxidatorgas direkt oder indirekt durch die erste Durchtrittsöffnung 21 der Abdeckplatte 20 in den Brennraum 3 eintritt, und zwar so, dass es dabei von dem über den Hohlraum 22 zugeführten Oxidatorgas umhüllt ist. Die Einleitung der Gase erfolgt somit bei jeder ersten Durchtrittsöffnung 21 der Abdeckplatte 20 koaxial ineinander. Auf diese Weise kann eine besonders intensive Durchmischung von Oxidator und Brennstoff erreicht werden.

Um die gewünschte Umhüllung des Brennstoffstroms mit dem Oxidatorstrom an der jeweiligen ersten Durchtrittsöffnung 21 der Abdeckplatte 20 besonders einfach erzielen zu können, sind die ersten Durchtrittsöffnungen 21 der Abdeckplatte 20 zweckmäßig mit einem größeren Querschnitt ausgestattet als die jeweils zugeordneten Durchtrittsöffnungen 23 der Grundplatte 19.

Grundsätzlich kann die Umhüllung des Brennstoffgases mit dem Oxidatorgas bereits im Hohlraum 22 erfolgen, wenn das Brennstoffgas durch die Durchtrittsöffnungen der Grundplatte 19 zunächst den Hohlraum 22 durchströmen muss, um zur jeweils zugeordneten ersten Durchtrittsöffnung 21 der Abdeckplatte 20 zu gelangen. Bevorzugt wird jedoch die hier gezeigte Ausführungsform, bei der mehrere oder alle Durchtrittsöffnungen 23 der Grundplatte 19 jeweils von einer Hülse 25 eingefasst sind. Diese Hülsen 25 stehen dabei von der Grundplatte 19 ab, ragen in den Hohlraum 22 hinein. Des Weiteren sind die zur Zuführung des Brennstoffs vorgesehenen Hülsen 25 an ihrem von der Grundplatte 19 entfernten Ende offen, wobei dieses offene Ende die jeweilige Brennstofföffnung 14 bildet. Bei den hier gezeigten Ausführungsformen sind die Hülsen 25 außerdem so dimensioniert, dass sie sich durch die jeweils zugeordnete erste Durchtrittsöffnung 21 der Abdeckplatte 20 hinein- bzw. so weit hindurcherstrecken, bis sie bündig mit der Abdeckplatte 20 abschließen. Grundsätzlich sind jedoch auch längere Hülsen 25 oder kürzere Hülsen 25 denkbar. Durch diese Bauweise wird erreicht, dass bei den jeweiligen Hülsen 25 jeweils radial zwischen der Hülse 25 und einem Öffnungsrand der jeweils zugeordneten ersten Düsenöffnung 21 der Abdeckplatte 20 ein Ringspalt 26 gebildet ist. Durch diesen Ringspalt 26 kann im Betrieb des Brenners 2 das über den Hohlraum 22 zugeführte Gas also hier der Oxidator in den Brennraum 3 eintreten. Letztlich definieren somit die Ringspalte 26 die Oxidatoröffnungen 15. Zweckmäßig sind die Hülsen 25 einstückig an der Grundplatte 19 ausgebildet, z. B. durch Tiefziehen der Grundplatte 19, wobei gleichzeitig die Öffnungen 23 und 14 ausgebildet werden können. Grundsätzlich sind jedoch auch separate Hülsen 25 denkbar, die dann mit der Grundplatte 19 auf geeignete Weise verbunden sind.

Obwohl bei den vorstehend und nachfolgend beschriebenen Ausführungsformen der Oxidator dem Hohlraum 22 und der Brennstoff dem Zuführraum 24 zugeführt wird, ist grundsätzlich auch eine umgekehrte Strömungsführung möglich, so dass dann der Oxidator dem Zuführraum 24 zugeführt wird, während der Brennstoff dem Hohlraum 22 zugeführt wird.

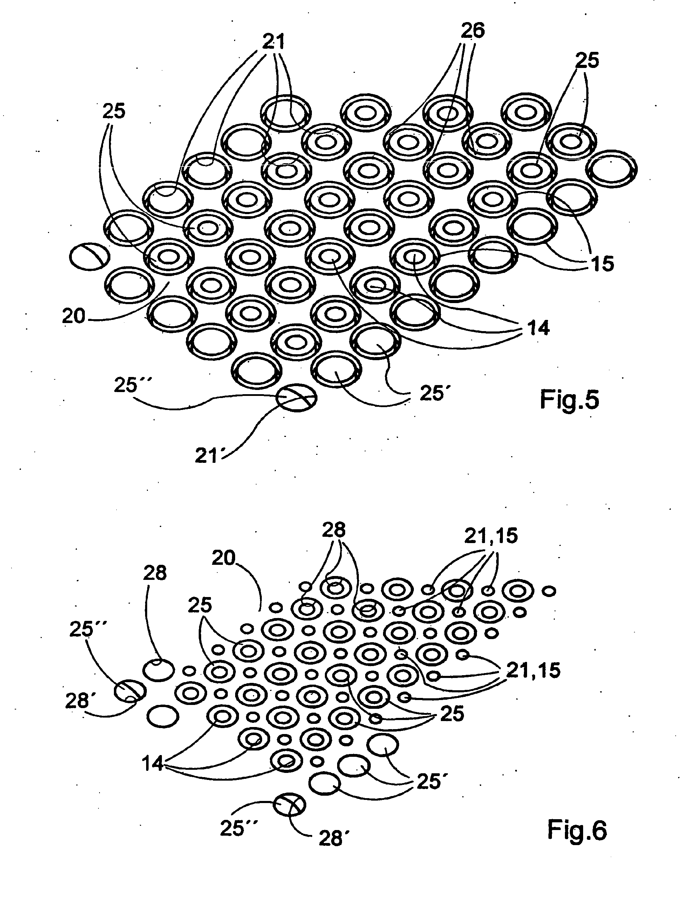

Fig. 5 zeigt nochmals eine perspektivische Ansicht eines Ausschnitts der Wandstruktur, an der dem Brennraum 3 zugewandten Seite. Deutlich erkennbar sind die Ringkanäle 26, welche die Oxidatoröffnungen 15 definieren, und die koaxial dazu angeordneten Brennstofföffnungen 14. Die Hülsen 25, die in die ersten Durchtrittsöffnungen 21 der Abdeckplatte 20 hineinragen und dadurch die Ringspalte 26 ausbilden, sind ebenfalls erkennbar. Um die offenen Hülsen 25, welche die Brennstofföffnungen 14 enthalten, sind verschlossene Hülsen 25' angeordnet. Auf diese Weise können die Ringspalte 26 und somit die ringförmigen Oxidatoröffnungen 15 definiert werden, ohne dass koaxial dazu Brennstofföffnungen 14 vorgesehen sind. Die außen angeordneten geschlossenen Hülsen 25' sind beispielsweise zur Positionierung im Kühlraum 17 vorgesehen. Grundsätzlich ist es jedoch auch möglich, derartige geschlossene Hülsen 25' in diesem Bereich wegzulassen und stattdessen die ersten Durchtrittsöffnungen 21 in diesem Bereich mit kleineren Querschnitten zu versehen. Desweiteren ist in Fig. 5 exemplarisch eine weitere Hülse 25" dargestellt, die in die zugehörige erste Durchtrittsöffnung 21' eingepasst ist. Insbesondere kann diese Hülse 25" mit der Abdeckplatte 20 verpresst sein. Auf diese Weise kann die Abdeckplatte 20 besonders intensiv und auf einfache Weise mit der Grundplatte 19 verbunden werden.

Fig. 6 zeigt nun eine andere Ausführungsform, bei der die Abdeckplatte 20 zusätzlich mehrere zweite Durchtrittsöffnungen 28 enthält. Diese zweiten Durchtrittsöffnungen 28 der Abdeckplatte 20 sind dabei koaxial zu den Durchtrittsöffnungen 23 der Grundplatte 19 ausgerichtet. Dies führt dazu, dass im Betrieb des Brenners 2 der Brennstoff zunächst durch die Durchtrittsöffnungen 23 der Grundplatte 19 und anschließend durch die zweiten Durchtrittsöffnungen 28 der Abdeckplatte 20 hindurchtritt, um in den Brennraum 3 zu gelangen. Im Unterschied dazu tritt der Oxidator durch die ersten Durchtrittsöffnungen 21 der Abdeckplatte 20 direkt in den Brennraum 3 ein. Damit sich der Brennstoff von den Durchtrittsöffnungen 23 der Grundplatte 19 bis zu den zweiten Durchtrittsöffnungen 28 der Abdeckplatte 20 nicht mit dem Oxidator vermischt, kann es auch hier zweckmäßig sein, zur Verbindung der Durchtrittsöffnungen 23 der Grundplatte 19 mit den jeweils zugeordneten zweiten Durchtrittsöffnungen 28 der Abdeckplatte 20 jeweils wieder eine Hülse 25 vorzusehen. Diese Hülsen 25 sind dann so angeordnet und angebracht, dass sie die jeweilige Verbindung zwischen zugehöriger Durchtrittsöffnung 23 und zugehöriger zweiter Durchtrittsöffnung 28 gegenüber dem Hohlraum 22 abdichten. Erreicht werden kann dies wie in Fig. 6 dargestellt dadurch, dass die Hülsen 25 passgenau in die zweiten Durchtrittsöffnung 28 hineinragen. Ebenso ist es grundsätzlich möglich, die Konstruktion kinematisch umzukehren, so dass die Hülsen 25 von der Abdeckplatte 20 ausgehen und sich in entsprechend dimensionierte Durchtrittsöffnung 23 der Grundplatte 19 dicht hinein erstrecken. Desweiteren können die Hülsen 25 sowohl in die Grundplatte 19 als auch in die Abdeckplatte 20 eingesteckt sein oder sowohl von der Abdeckplatte 20 als auch von der Grundplatte 19 stirnseitig radial überlappt sein.

Fig. 6 zeigt noch exemplarisch geschlossene Hülsen 25", die mit den zweiten Durchtrittsöffnungen 28' verpresst sind, um die Abdeckplatte 20 an der Grundplatte 19 zu fixieren.

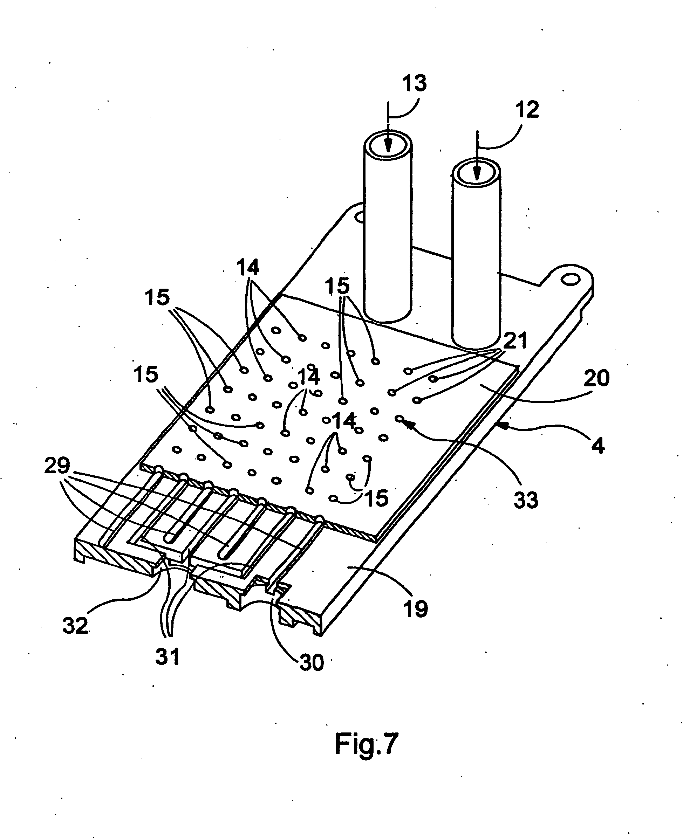

Entsprechend Fig. 7 kann bei einer anderen Ausführungsform in die Grundplatte 19 ein Oxidatorkanalsystem 29 eingearbeitet sein, das auf geeignete Weise an eine Oxidatorzuführung 30 angeschlossen ist. In entsprechender Weise ist bei dieser Ausführungsform in die Grundplatte 19 außerdem ein Brennstoffkanalsystem 31 eingearbeitet, das an eine Brennstoffzuführung 32 angeschlossen ist. Während das Oxidatorkanalsystem 29 mit den Oxidatoröffnungen 15 kommuniziert, ist das Brennstoffkanalsystem 31 mit den Brennstofföffnungen 14 verbunden. Die einzelnen Kanäle der Kanalsysteme 29 und 31 sind an der dem Brennraum 3 zugewandte Seite in die Grundplatte 19 eingearbeitet, z.B. eingefräst oder eingeprägt. Die Kanäle sind somit zum Brennraum 3 hin offen. Durch die Abdeckplatte 20 sind sie jedoch verdeckt, wobei die Abdeckplatte 20 wieder mit den ersten Durchtrittsöffnung 21 versehen ist, die hier ein Lochmuster 33 bilden. Dieses Lochmuster 33 ist dabei auf die Kanalsysteme 29, 31 so abgestimmt, dass die ersten Durchtrittsöffnungen 21 der Abdeckplatte 20 auf den einzelnen Kanälen der Kanalsysteme 29, 31 zu liegen kommen und dadurch die Brennstofföffnungen 14 und die Oxidatoröffnungen 15 bilden.

Die Brennstoffzuführung 32 ist im Einbauzustand an den Brennstoffpfad 12 der Brennstoffzelle 8 angeschlossen, während die Oxidatorzuführung 30 an den Oxidatorpfad 13 der Brennstoffzelle 8 angeschlossen ist.

Zweckmäßig umfasst der Brenner 2 in üblicher Weise eine nicht gezeigte Zündeinrichtung sowie eine nicht gezeigte Sensorik, insbesondere zur Messung von Temperaturen, Drücken und/oder Emissionen.

## Patentansprüche

1. Kombination einer Brennstoffzelle (8) und eines Brenners (2) zum Verbrennen eines gasförmigen wasserstoffhaltigen Brennstoffs mit einem gasförmigen sauerstoffhaltigen Oxidator,
- mit einem Brennraum (3), in dem im Betrieb des Brenners (2) die Verbrennungsreaktion abläuft,
- wobei der Brennstoff durch ein an einer Anodenseite einer Brennstoffzelle (8) austretendes Wasserstoff-Produktgas-Gemisch gebildet ist,
- wobei der Oxidator zumindest teilweise durch ein an einer Kathodenseite einer Brennstoffzelle (8) austretendes Sauerstoff-Produktgas-Gemisch gebildet ist,- wobei die Brennstoffzelle (8) zwei Endplatten (9, 10) und mehrere Elektrolyplatten (11) aufweist, die zwischen den Endplatten (9, 10) angeordnet und aufeinander gestapelt sind und in oder zwischen denen ein Brennstoffpfad (12) und ein Oxidatorpfad (13) ausgebildet ist,
**gekennzeichnet durch** eine den Brennraum (3) eingangsseitig verschließende Wandstruktur (4), die eine der beiden Endplatten (9, 10) bildet und die mehrere Brennstofföffnungen (14), **durch** die im Betrieb des Brenners (2) der Brennstoff in den Brennraum (3) eingeleitet wird, und mehrere Oxidatoröffnungen (15) aufweist, **durch** die im Betrieb des Brenners (2) der Oxidator in den Brennraum (3) eingeleitet wird.

2. Kombination nach Anspruch 1,
**dadurch gekennzeichnet,**
**dass** zumindest ein im Betrieb des Brenners (2) durch Verbrennungswärme beheizter Wärmeübertrager (5) vorgesehen ist, der in einen Heizkreis eingebunden ist, der zum beheizen wenigstens eines Mitglieds folgender Gruppe dient:
- Brennkraftmaschine,
- Brennkraftmaschine in einem Kraftfahrzeug,
- Fahrgastraum eines Fahrzeugs,
- Frachtraum eines Fahrzeugs,
- zumindest ein Edukt eines Reformer- und Brennstoffzellenprozesses.

3. Kombination nach einem der Ansprüche 1 bis 2,
**dadurch gekennzeichnet,**
**dass** die Brennstofföffnungen (14) und die Oxidatoröffnungen (15) in einer Ebene liegen.

4. Kombination nach einem der Ansprüche 1 bis 3,
**dadurch gekennzeichnet,**
**dass** die Oxidatoröffnungen (15) und die Brennstofföffnungen (14) gleichmäßig und/oder symmetrisch verteilt angeordnet sind.

5. Kombination nach einem der Ansprüche 1 bis 4,
**dadurch gekennzeichnet,**
- **dass** der Brennraum (3) seitlich von einer außenliegenden Außenwandung (6) und einer innenliegenden Innenwandung (16) eingefasst ist,
- **dass** zwischen Innenwandung (16) und Außenwandung (6) ein Kühlraum (17) ausgebildet ist, der eingangsseitig mit mehreren Oxidatoröffnung (15) der Wandstruktur (4) verbunden ist und ausgangsseitig mit dem Brennraum (3) kommuniziert.

6. Kombination nach einem der Ansprüche 1 bis 5, **dadurch gekennzeichnet,**
- **dass** die Wandstruktur (4) eine Grundplatte (19) und eine Abdeckplatte (20) aufweist, die an einer dem Brennraum (3) zugewandten Seite der Grundplatte (19) angeordnet ist,
- **dass** die Abdeckplatte (20) mehrere erste Durchtrittsöffnungen (21) aufweist, von denen zumindest einige die Brennstofföffnungen (14) oder die Oxidatoröffnungen (15) bilden.

7. Kombination nach Anspruch 6,
**dadurch gekennzeichnet,**
**dass** zwischen Abdeckplatte (20) und Grundplatte (19) ein Hohlraum (22) ausgebildet ist, mit dem die ersten Durchtrittsöffnungen (21) kommunizieren.

8. Kombination nach Anspruch 7,
**dadurch gekennzeichnet,**
- **dass** die Grundplatte (19) mehrere Durchtrittsöffnungen (23) aufweist, die mit einem Zuführraum (24) kommunizieren, der durch die Grundplatte (19) vom Hohlraum (22) getrennt ist,
- **dass** im Betrieb des Brenners (2) das eine Gas, also der Oxidator oder der Brennstoff, über den Hohlraum (22) und das anders Gas, also der Brennstoff oder der Oxidator, über den Zuführraum (24) dem Brennraum (3) zugeführt wird.

9. Kombination nach Anspruch 8,
**dadurch gekennzeichnet,**
**dass** die Durchtrittsöffnungen (23) der Grundplatte (19) koaxial zu den ersten Durchtrittsöffnungen (21) der Abdeckplatte (20) angeordnet sind, so dass im Betrieb des Brenners (2) das über den Zuführraum (24) zugeführte Gas und das über den Hohlraum (22) zugeführte Gas durch die erste Durchtrittsöffnung (21) der Abdeckplatte (20) in den Brennraum (3) eintreten, wobei das über den Zuführraum (24) zugeführte Gas dabei vom über den Hohlraum (22) zugeführten Gas umhüllt ist.

10. Kombination nach Anspruch 9,
**dadurch gekennzeichnet,**
**dass** die ersten Durchtrittsöffnungen (21) der Abdeckplatte (20), die zu den Durchtrittsöffnungen (23) der Grundplatte (19) fluchten, jeweils einen größeren Querschnitt aufweisen als die jeweils zugeordnete Durchtrittsöffnung (23) der Grundplatte (19).

11. Kombination nach Anspruch 9 oder 10,
**dadurch gekennzeichnet,**
- **dass** mehrere oder alle Durchtrittsöffnungen (23) der Grundplatte (19) jeweils von einer Hülse (25) eingefasst sind, die von der Grundplatte (19) in den Hohlraum (22) hinein absteht und zur zugeordneten ersten Durchtrittsöffnung (21) der Abdeckplatte (20) führt,
- **dass** mehrere oder alle Hülsen (25) jeweils an ihrem von der Grundplatte (19) entfernten Ende offen sind,
- **dass** bei mehreren oder allen Hülsen (25) jeweils radial zwischen der Hülse (25) und einem Öffnungsrand der jeweils zugeordneten ersten Durchtrittsöffnung (21) der Abdeckplatte (20) ein Ringspalt (26) ausgebildet ist, durch den im Betrieb des Brenners (2) das über den Hohlraum (22) zugeführte Gas in den Brennraum (3) eintritt.

12. Kombination nach Anspruch 8,
**dadurch gekennzeichnet,**
**dass** die Abdeckplatte (20) mehrere zweite Durchtrittsöffnungen (28) aufweist, die koaxial zu den Durchtrittsöffnungen (21) der Grundplatte (19) angeordnet sind, so dass im Betrieb des Brenners (2) das über den Hohlraum (22) zugeführte Gas durch die ersten Durchtrittsöffnungen (21) der Abdeckplatte (20) und das über den Zuführraum (24) zugeführte Gas durch die zweiten Durchtrittsöffnungen (28) der Abdeckplatte (20) in den Brennraum (3) gelangt.

13. Kombination nach Anspruch 12,
**dadurch gekennzeichnet,**
**dass** bei mehreren oder allen Durchtrittsöffnungen (23) der Grundplatte (19) jeweils eine Hülse (25) im Hohlraum (22) angeordnet ist, welche die jeweilige Durchtrittsöffnung (23) der Grundplatte (19) mit der jeweils zugeordneten zweiten Durchtrittsöffnung (28) der Abdeckplatte (20) gegenüber dem Hohlraum (22) abgedichtet verbindet.

14. Kombination zumindest nach Anspruch 11 oder 12, **dadurch gekennzeichnet,**
- **dass** zumindest eine der Hülsen (25) zum Befestigen der Abdeckplatte (20) an der Grundplatte (19) dient, und/oder
- **dass** zumindest eine der Hülsen (25) an ihrem von der Grundplatte (19) entfernten Ende verschlossen ist.

15. Kombination nach Anspruch 6,
**dadurch gekennzeichnet,**
- **dass** die Grundplatte (19) ein Oxidatorkanalsystem (29) enthält, das an eine Oxidatorzuführung (30) angeschlossen ist und mit einigen der ersten Durchtrittsöffnungen (21) der Abdeckplatte (20) kommuniziert,
- **dass** die Grundplatte (19) ein Brennstoffkanalsystem (31) enthält, das an eine Brennstoffzuführung (32) angeschlossen ist und mit anderen der ersten Durchtrittsöffnungen (21) der Abdeckplatte (20) kommuniziert.

16. Kombination nach Anspruch 15,
**dadurch gekennzeichnet,**
**dass** die Kanäle der Kanalsystem (29, 31) zum Brennraum (3) hin offen und durch die Abdeckplatte (20) abgedeckt sind.

## Claims

1. A combination of a fuel cell (8) and of a burner (2) for combusting a gaseous hydrogen-containing fuel with a gaseous oxygen-containing oxidant,
- having a combustion chamber (3), in which during the operation of the burner (2) the combustion reaction takes place,
- wherein the fuel is formed through a hydrogen-product gas mixture exiting on an anode side of a fuel cell (8),
- wherein the oxidant is at least partially formed through an oxygen-product gas mixture exiting on a cathode side of a fuel cell (8), - wherein the fuel cell (8) comprises two end plates (9, 10) and a plurality of electrolyte plates (11), which are arranged between the end plates (9, 10) and are stacked on top of one another and in or between which a fuel path (12) and an oxidant path (13) is formed,
**characterized by** a wall structure (4) closing off the combustion chamber (3) on the inlet side, which forms one of the two end plates (9, 10) and which comprises a plurality of fuel openings (14), through which during the operation of the burner (2) the fuel is introduced into the combustion chamber (3), and a plurality of oxidant openings (15), through which during the operation of the burner (2) the oxidant is introduced into the combustion chamber (3).

2. The combination according to Claim 1, **characterized in that** at least one heat transfer device (5) which during the operation of the burner (2) is heated through combustion heat is provided, which is incorporated in a heating circuit, which serves for heating at least one member of the following group:
- internal combustion engine,
- internal combustion engine in a motor vehicle,
- passenger compartment of a vehicle,
- freight compartment of a vehicle,
- at least one reactant of a reformer and fuel cell process.

3. The combination according to any one of the Claims 1 to 2, **characterized in that** the fuel openings (14) and the oxidant openings (15) lie in a plane.

4. The combination according to any one of the Claims 1 to 3, **characterized in that** the oxidant openings (15) and the fuel openings (14) are arranged evenly and/or symmetrically distributed.

5. The combination according to any one of the Claims 1 to 4, **characterized**
- **in that** the combustion chamber (3) on the side is enclosed by an outer wall (6) located on the outside and an inner wall (16) located on the inside,
- **in that** between inner wall (16) and outer wall (6) a cooling space (17) is formed, which on the inlet side is connected to a plurality of oxidant openings (15) of the wall structure (4) and on the outlet side communicates with the combustion chamber (3).

6. The combination according to any one of the Claims 1 to 5, **characterized**
- **in that** the wall structure (4) comprises a baseplate (19) and a cover plate (20), which is arranged on a side of the baseplate (19) facing the combustion chamber (3),
- **in that** the cover plate (20) comprises a plurality of first passage openings (21), of which at least some form the fuel openings (14) or the oxidant openings (15).

7. The combination according to Claim 6, **characterized in that** between cover plate (20) and baseplate (19) a hollow space (22) is formed, with which the first passage openings (21) communicate.

8. The combination according to Claim 7, **characterized**
- **in that** the baseplate (19) comprises a plurality of passage openings (23), which communicate with a feed space (24), which is separated from the hollow space (22) by the baseplate (19),
- **in that** during the operation of the burner (2) the one gas, i.e. the oxidant or the fuel, is fed to the combustion chamber (3) via the hollow space (22) and the other gas, i.e. the fuel or the oxidant, via the feed space (24).

9. The combination according to Claim 8, **characterized in that** the passage openings (23) of the baseplate (19) are arranged coaxially to the first passage openings (21) of the cover plate (20), so that during the operation of the burner (2) the gas fed in via the feed space (24) and the gas fed in via the hollow space (22) enter the combustion chamber (3) through the first passage opening (21) of the cover plate (20), wherein the gas fed in via the feed space (24) in the process is enveloped by the gas fed in via the hollow space (22).

10. The combination according to Claim 9, **characterized in that** the first passage openings (21) of the cover plate (20), which are aligned with the passage openings (23) of the baseplate (19), each have a larger cross section than the respective associated passage opening (23) of the baseplate (19).

11. The combination according to Claim 9 or 10, **characterized**
- **in that** a plurality of or all passage openings (23) of the baseplate (19) each are enclosed by a sleeve (25), which from the baseplate (19) projects into the hollow space (22) and leads to the associated first passage opening (21) of the cover plate (20),
- **in that** a plurality of or all sleeves (25) are each open on their end that is distant from the baseplate (19),
- **in that** in the plurality of or all sleeves (25), in each case radially between the sleeve (25) and an opening rim of the respective associated first passage opening (21) of the cover plate (20) an annular gap (26) is formed, through which during the operation of the burner (2) the gas fed in via the hollow space (22) enters the combustion chamber (3).

12. The combination according to Claim 8, **characterized in that** the cover plate (20) comprises a plurality of second passage openings (28), which are arranged coaxially to the passage openings (21) of the baseplate (19), so that during the operation of the burner (2) the gas fed in via the hollow space (22) reaches the combustion chamber (3) through the first passage openings (21) of the cover plate (20) and the gas fed in via the feed space (24), through the second passage openings (28) of the cover plate (20).

13. The combination according to Claim 12, **characterized in that** in a plurality or all passage openings (23) of the baseplate (19), a sleeve (25) each is arranged in the hollow space (22), which connects the respective passage opening (23) of the baseplate (19) with the respective associated second passage opening (28) of the cover plate (20) with respect to the hollow space (22) in a sealed manner.

14. The combination at least according to Claim 11 or 12, **characterized**
- **in that** at least one of the sleeves (25) serves for fastening the cover plate (20) on the baseplate (19), and/or
- **in that** at least one of the sleeves (25) at its end that is distant from the baseplate (19) is closed off.

15. The combination according to Claim 6, **characterized**
- **in that** the baseplate (19) contains an oxidant channel system (29), which is connected to an oxidant feed (30) and communicates with some of the first passage openings (21) of the cover plate (20),
- **in that** the baseplate (19) contains a fuel channel system (31), which is connected to a fuel feed (32) and communicates with other ones of the first passage openings (21) of the cover plate (20).

16. The combination according to Claim 15, **characterized in that** the channels of the channel system (29, 31) are open towards the combustion chamber (3) and are covered by the cover plate (20).

## Revendications

1. Combinaison d'une cellule de combustible (8) et d'un brûleur (2) afin de brûler un combustible gazeux contenant de l'hydrogène avec un oxydant gazeux contenant de l'oxygène,
- comportant une chambre de combustion (3), dans laquelle la réaction de combustion s'écoule lors du fonctionnement du brûleur (2),
- dans laquelle le combustible est formé par un mélange d'hydrogène et gaz produit ressortant sur un côté d'anode d'une cellule de combustible (8),
- dans laquelle l'oxydant est formé au moins partiellement par un mélange d'oxygène et gaz produit ressortant sur un côté de cathode d'une cellule de combustible (8), dans laquelle la cellule de combustible (8) présente deux plaques d'extrémité (9, 10) et plusieurs plaques d'électrolyte (11), qui sont disposées entre les plaques d'extrémité (9, 10) et empilées les unes sur les autres et dans ou entre lesquelles un trajet de combustible (12) et un trajet d'oxydant (13) est réalisé,
**caractérisé par** une structure de paroi (4) obturant la chambre de combustion (3) du côté d'entrée, qui forme une des deux plaques d'extrémité (9, 10) et qui présente plusieurs ouvertures de combustible (14), à travers lesquelles lors du fonctionnement du brûleur (2) le combustible est introduit dans la chambre de combustion (3), et plusieurs ouvertures d'oxydant (15), à travers lesquelles l'oxydant est introduit dans la chambre de combustion (3) lors du fonctionnement du brûleur (2).

2. Combinaison selon la revendication 1, **caractérisée en ce que** au moins un échangeur thermique (5) chauffé par la chaleur de combustion lors du fonctionnement du brûleur (2) est prévu, qui est intégré dans un circuit de chauffage, qui sert à chauffer au moins un élément du groupe suivant :
- moteur à combustion interne,
- moteur à combustion interne dans un véhicule automobile,
- compartiment passager d'un véhicule automobile,
- coffre d'un véhicule automobile,
- au moins un composant de départ d'un processus de reformeur et de cellule de combustible.

3. Combinaison selon une des revendications 1 à 2, **caractérisée en ce que** les ouvertures de combustible (14) et les ouvertures d'oxydant (15) sont situées dans un plan.

4. Combinaison selon une des revendications 1 à 3, **caractérisée en ce que** les ouvertures d'oxydant (15) et les ouvertures de combustible (14) sont réparties uniformément et/ou symétriquement.

5. Combinaison selon une des revendications 1 à 4, **caractérisée en ce que**
- la chambre de combustion (3) est encadrée latéralement par une paroi externe (6) située à l'extérieur et une paroi interne (16) située à l'intérieur,
- entre la paroi interne (16) et la paroi externe (6) une chambre de refroidissement (17) est réalisée, qui est reliée du côté d'entrée à plusieurs ouvertures d'oxydant (15) de la structure de paroi (4) et communique du côté de sortie avec la chambre de combustion (3).

6. Combinaison selon une des revendications 1 à 5, **caractérisée en ce que**
- la structure de paroi (4) présente une plaque de fond (19) et une plaque de couvercle (20), qui est disposée sur un côté de la plaque de fond (19) tourné vers la chambre de combustion (3),
- la plaque de couvercle (20) présente plusieurs premières ouvertures traversantes (21), desquelles au moins quelques-unes forment les ouvertures de combustible (14) ou les ouvertures d'oxydant (15).

7. Combinaison selon la revendication 6, **caractérisée en ce que** entre la plaque de couvercle (20) et la plaque de fond (19), une chambre creuse (22) est réalisée, avec lequel communiquent les premières ouvertures traversantes (21).

8. Combinaison selon la revendication 7, **caractérisé en ce que**
- la plaque de fond (19) présente plusieurs ouvertures traversantes (23), qui communiquant avec une chambre d'alimentation (24), qui est séparée de la plaque de fond (19) par une chambre creuse (22),
- lors du fonctionnement du brûleur (2), un des gaz, c'est à dire l'oxydant ou le combustible, est alimenté par l'intermédiaire de la chambre creuse (22) et l'autre gaz, c'est à dire le combustible ou l'oxydant, est alimenté par l'intermédiaire de la chambre d'alimentation (24) dans la chambre de combustible (3).

9. Combinaison selon la revendication 8, **caractérisée en ce que** les ouvertures traversantes (23) de la plaque de fond (19) sont disposées coaxialement par rapport aux premières ouvertures traversantes (21) de la plaque de couvercle (20), de sorte que lors du fonctionnement du brûleur (2) le gaz alimenté par l'intermédiaire de la chambre d'alimentation (24) et le gaz alimenté par l'intermédiaire de la chambre creuse (22) entrent à travers les premières ouvertures traversantes (21) de la plaque de couvercle (20) dans la chambre de combustion (3), dans laquelle le gaz introduit par l'intermédiaire de la chambre d'alimentation (24) est ainsi enveloppé par le gaz alimenté par l'intermédiaire de la chambre creuse (22).

10. Combinaison selon la revendications 9, **caractérisée en ce que** les premières ouvertures traversantes (21) de la plaque de couvercle (20), qui s'alignent avec les ouvertures traversantes (23) de la plaque de fond (19), présentent respectivement une plus grande section transversale que l'ouverture traversante (23) respectivement coordonnée de la plaque de fond (19).

11. Combinaison selon les revendications 9 ou 10, **caractérisée en ce que**
- plusieurs ou toutes les ouvertures traversantes (23) de la plaque de fond (19) sont respectivement serties dans un manchon (25), qui dépasse de la plaque de fond (19) à l'intérieur de la chambre creuse (22) et mène à la première ouverture traversante (21) coordonnée de la plaque de couvercle (20),
- plusieurs ou tous les manchons (25) sont respectivement ouverts sur leur extrémité éloignée de la plaque de fond (19),
- sur plusieurs ou tous les manchons (25), un interstice annulaire (26) est réalisé respectivement radialement entre le manchon (25) et un bord d'ouverture de la première ouverture traversante (21) respectivement coordonnée de la plaque de couvercle (20), à travers lequel, lors du fonctionnement du brûleur (2), le gaz alimenté par l'intermédiaire de la chambre creuse (22) entre dans la chambre de combustion (3).

12. Combinaison selon la revendications 8, **caractérisée en ce que** la plaque de couvercle (20) présente plusieurs deuxièmes ouvertures traversantes (28), qui sont disposées coaxialement aux ouvertures traversantes (21) de la plaque de fond (19), de sorte que, lors du fonctionnement du brûleur (2), le gaz alimenté par l'intermédiaire de la chambre creuse (22) parvient à travers les premières ouvertures traversantes (21) de la plaque de couvercle (20) et le gaz alimenté par l'intermédiaire de la chambre d'alimentation (24) parvient à travers les deuxièmes ouvertures traversantes (28) de la plaque de couvercle (20) dans la chambre de combustion (3).

13. Combinaison selon la revendications 12, **caractérisée en ce que** sur plusieurs ou toutes les ouvertures traversantes (23) de la plaque de fond (19), respectivement un manchon (25) est disposé dans la chambre creuse (22), qui relie de manière étanche par rapport à la chambre creuse (22) l'ouverture traversante respective (23) de la plaque de fond (19) avec la deuxième ouverture traversante (28) respectivement coordonnée de la plaque de couvercle (20).

14. Combinaison selon au moins la revendication 11 ou 12, **caractérisée en ce que**
- au moins un des manchons (25) sert à fixer la plaque de couvercle (20) sur la plaque de fond (19), et/ou
- au moins un des manchons (25) est obturé sur son extrémité éloignée de la plaque de fond (19).

15. Combinaison selon la revendication 6, **caractérisée en ce que**
- la plaque de fond (19) contient un système de canal d'oxydant (29), qui est raccordé à une conduite d'amenée d'oxydant (30) et communique avec quelques-unes des premières ouvertures traversantes (21) de la plaque de couvercle (20),
- la plaque de fond (19) contient un système de canal de carburant (31), qui est raccord éà une conduite d'amenée de combustible (32) et communique avec les autres premières ouvertures traversantes (21) de la plaque de couvercle (20).

16. Combinaison selon la revendication 15, **caractérisée en ce que** les canaux du système de canaux (29, 31) sont ouverts en allant vers la chambre de combustion (3) et sont recouverts par la plaque de couvercle (20).
